# EUROPÄISCHE PATENTSCHRIFT

(11) **EP 0 433 537 B1**
(45) Veröffentlichungstag und Bekanntmachung des Hinweises auf die Patenterteilung: **09.03.1994**
(21) Anmeldenummer: 90109614.9
(22) Anmeldetag: 21.05.1990
(51) Int. Cl.: A61C 19/04, A61B 5/103

(54) **Messtaster zur Erfassung der Taschentiefe des Zahnhalteapparates**
Periodontal depth probe
Sonde pour mesurer la profondeur périodontique

(30) Priorität: 20.12.1989 EP 89123556
(43) Veröffentlichungstag der Anmeldung: 26.06.1991
(73) Patentinhaber: Fuierer, Dieter, Dr., D-83026 Rosenheim (DE)
(72) Erfinder: Fuierer, Dieter, Dr., D-83026 Rosenheim (DE)
(74) Vertreter: Tiedtke, Harro, Dipl.-Ing.

(56) Entgegenhaltungen:
- EP-A- 0 286 067
- WO-A-84/03143
- WO-A-89/01314
- US-A- 4 883 425

## Beschreibung

Die Erfindung betrifft einen Meßtaster gemäß dem Oberbegriff des Patentanspruchs 1.

Aus der EP-A 0 286 067 ist ein derartiger Meßtaster bekannt, bei dem die Taschentiefe durch Einführen des Taststifts bis zum Zahnfleischtaschengrund und nachfolgender Bewegung des Lichtstrahls bis zum oberen Rand des Zahnfleisches unter Steuerung durch den Benutzer gemessen wird. Bei Betätigung einer Übernahmetaste wird ein der aktuellen Winkellage des Lichtstrahlgenerators entsprechender Wert als Maß für die Taschentiefe ausgewertet. Eine solche Ausgestaltung mit bewegtem Lichtstrahl hat gegenüber dem Einsatz von gleitend am oder im Taststift geführten Tastelementen den Vorteil, daß der Meßvorgang im wesentlichen kraftfrei ausgeführt werden kann, da keine Kräfte für die Verschiebung des Tastelements aufgebracht werden müssen. Zudem sind Probleme aufgrund eines Zusetzens der Gleitführung mit entsprechender Erschwerung oder sogar Blockierung der Tastelementbewegung ausgeschaltet. Allerdings erfordert die durch den Benutzer gesteuerte Bewegung des Lichtstrahls auf den oberen Zahnfleischrand eine exakte Sichtkontrolle, um Meßfehler auszuschließen. Dies begründet entsprechende Konzentrationsbeanspruchung des Benutzers. Zudem ist diese Meßmethode bei schwer einsehbaren Gebißbereichen schwierig durchzuführen.

Ein weiterer Meßtaster zur Erfassung der Tiefe einer Zahnfleischtasche ist aus der US-A-4 883 425 bekannt. Der Meßaufbau besteht hierbei aus einem Taststift, der bis zum Grund der Zahnfleischtasche einführbar ist, einer Detektoreinrichtung zum Erfassen von unterschiedlichen Lichtmengen und einer Auswerteeinrichtung, wobei der Taststift aus einem lichtleitenden Material besteht. Über eine Fiberglasleitung wird dem lichtleitenden Taststift Licht zugeführt, wodurch der Taststift zum Leuchten angeregt wird und seinerseits die Detektoreinrichtung bestrahlt. Die Tiefe der Zahnfleischtasche wird hierbei durch das Vergleichen von unterschiedlichen Lichtmengen bestimmt. Die Genauigkeit der Messung wird bei diesem Meßtaster jedoch in hohem Maße von Umgebungslicht, Verschmutzungen am Taststift durch Blut und Speichel usw. negativ beeinflußt.

Der Erfindung liegt daher die Aufgabe Zugrunde, einen Meßtaster der eingangs genannten Art derart weiterzubilden, daß die Meßgenauigkeit erhöht und der Bedienungskomfort verbessert wird.

Diese Aufgabe wird gelöst durch einen Meßtaster mit einem Taststift, der bis zum Grund der Zahnfleischtasche einführbar ist, einem relativ zum Taststift bewegbaren Lichtstrahl und einer Auswerteeinrichtung, wobei eine Detektoreinrichtung vorhanden ist, die durch den Lichtstrahl oder den reflektierten Lichtstrahl während dessen Bewegung bestrahlt wird und deren Ausgangssignale der Auswerteeinrichtung zugeführt werden, wobei der Lichtstrahl so gesteuert ist, daß er im eingesetzten Zustand des Taststiftes kontinuierlich entlang des Taststiftes bzw. seitlich neben dem Taststift und über den Zahnfleischrand hinaus bewegt wird, und wobei die Auswerteeinrichtung die Taschentiefe mittels der von der Detektoreinrichtung zugeführten Ausgangssignale dadurch ermittelt, daß die Anzahl der Lichtblitze oder -impulse bzw. die Lage des Übergangs zwischen hohem und niedrigen Signalpegel des von der Detektoreinrichtung registrierten Lichtstrahls festgestellt wird.

Bei dem Meßtaster ist somit eine Detektoreinrichtung vorhanden, die durch den Lichtstrahl bei dessen Bewegung bestrahlt wird. Die Detektoreinrichtung gibt folglich ein Ausgangssignal ab, dessen Verlauf repräsentativ für die durch den abgetasteten Bereich bewirkte Modulation des Lichtstrahls ist. Diese Modulation wird durch die Unterschiede in der Absorption oder Schwächung des Lichts im Bereich des Zahnfleisches und der darüberliegenden freiliegenden Bereiche des Zahns oder des Taststifts hervorgerufen. Die Auswerteeinrichtung kann aus dem Verlauf des Ausgangssignals der Detektoreinrichtung die Höhe des Zahnfleisches zwischen Taststiftspitze, d.h. Taschengrund, und Zahnfleisch-Oberkante und damit die Taschentiefe berechnen. Diese ermittelte Ausgangsgröße kann dann dauerhaft registriert und/oder auf einem Sichtschirm angezeigt werden.

Gemäß Patentanspruch 2 ist die Detektoreinrichtung am Griffstück des Meßtasters angebracht, so daß alle aktiven Komponenten, wie etwa der den Lichtstrahl erzeugende Lichtstrahlgenerator, die Detektoreinrichtung und ggf. die Auswerteeinrichtung im Griffstück unterbringbar sind. Im Bereich des mit dem Patienten in Berührung kommenden Taststifts sind in diesem Fall keine aktiven spannungsführenden Komponenten oder mechanisch bewegbaren Komponenten vorhanden, so daß die Sicherheit des Patienten nicht beeinträchtigt ist und auch die Funktionsfähigkeit des Meßtasters keinen Störungen unterworfen ist. Die Detektoreinrichtung erfaßt in diesem Fall das von dem durch den Lichtstrahl bestrahlten Bereich reflektierte Licht, dessen Reflexionsanteile im Zahnfleischbereich in aller Regel geringer sind als die von den freiliegenden Zahn- oder Taststiftbereichen reflektierten Anteile.

Durch die Anordnung einer Meßskala am Taststift gemäß Patentanspruch 3 werden beim Überstreichen des Lichtstrahls über die Meßskala lediglich von den freiliegenden Reflexionsfeldern impulsartige Lichtreflexe erzeugt, die durch die Detektoreinrichtung erfaßt werden. Die unteren Abschnitte der Meßskala des in die Zahnfleischtasche eingeführten Taststifts sind demgegenüber durch das Zahnfleisch abgedeckt, so daß von diesen Abschnitten keine Lichtimpulse reflektiert werden. Die Auswertung kann daher in einfacher Weise durch Zählen der Anzahl der durch die Detektoreinrichtung erfaßten Lichtimpulse erfolgen, wobei die Differenz zwischen der Anzahl der maximal möglichen Lichtreflexe, d.h. der Anzahl der vorhandenen Meßskala-Reflektorflächen, und der Anzahl der erfaßten Lichtimpulse bzw. -reflexe die jeweilige Taschentiefe repräsentiert.

Gemäß Patentanspruch 1 kann der Lichtstrahl auch seitlich neben dem Taststift bewegt werden, so daß als Taststift ein handelsüblicher Sondenkopf ohne irgendwelche speziellen Eigenheiten verwendet werden kann. Die Signalerfassung erfolgt hierbei durch Auswertung des unterschiedlichen Reflexionsvermögens des Zahnfleisches und der darüber freiliegenden Zahnbereiche, wobei das Ausgangssignal der Detektoreinrichtung im Bereich des oberen Zahnfleischrandes sprungförmigen Verlauf besitzt. Durch Erfassung der Lage dieses sprungförmigen Übergangs im Detektoreinrichtungs-Ausgangssignal läßt sich die Taschentiefe feststellen.

Der gemäß Patentanspruch 5 vorgesehene Einsatz einer Laserdiode im Lichtstrahlgenerator hat den Vorteil, daß verhältnismäßig hohe Lichtintensität bei geringem Strahldurchmesser erreichbar ist, wobei zudem die Fokusierungsmaßnahmen wesentlich einfacher als bei herkömmlichen Lichtquellen sind.
Die gemäß Patentanspruch 6 vorgesehene stationäre Lagerung des Lichtstrahlgenerators, der vorzugsweise gemäß Patentanspruch 5 durch eine Laserdiode gebildet ist, bringt den Vorteil, daß die Befestigung sehr einfach realisiert werden kann und kein Schwenkmechanismus zum Schwenken des Lichtstrahlgenerators (für die Lichtstrahl-Bewegung) erforderlich ist. Ein solcher Schwenkmechanismus kann zudem mit dem Nachteil verbunden sein, daß die Schwenkbewegung mit zunehmender Lebensdauer schwergängiger wird und/oder die Bezugslagen für die unterste und obere Schwenklage aufgrund der Ablagerung von Staub- oder Abriebteilchen oder dergleichen sich verändern können. Die Umsetzung des vom stationären Lichtstrahlgenerator abgegebenen Lichtstrahls in einen sich bewegenden Lichtstrahl wird durch einen Drehspiegel bewirkt, der als Galvanospiegel ausgebildet sein kann, jedoch vorzugsweise gemäß Patentanspruch 7 kontinuierlich umläuft. Durch den kontinuierlichen Umlauf des Drehspiegels wird der Lichtstrahl stets nur in einer Richtung, beispielsweise von unten nach oben verschwenkt und führt somit die Abtastung stets nur in einer Richtung durch. Dies erleichtert die Signalauswertung, da der zeitliche Verlauf des Detektoreinrichtungs-Ausgangssignals jeweils den in einer einzigen Richtung gesehenen räumlichen Verlauf der durch den Lichtstrahl abgetasteten Oberfläche repräsentiert.

Durch die gemäß Anspruch 8 vorgesehene Gestaltung mit nur einer einzigen Bedienungstaste kann einerseits die Bedienung erleichtert werden, da jeweils nur eine einzige Taste betätigt werden muß. Andererseits ist auch die Leistungsaufnahme des Meßtasters verringert, da lediglich während der Messung, d.h. nach erster Tastenbetätigung eine Aktivierung des Lichtstrahlgenerators und der elektrischen Komponenten erforderlich ist, während die zweite Tastenbetätigung zu einem Stillsitzen dieser Komponenten unter gleichzeitiger Übernahme des ermittelten Meßwerts führt.

Alternativ kann es auch vorteilhaft sein, den Umlenkspiegel (Drehspiegel) kontinuierlich rotieren zu lassen und auch den Lichtstrahlgenerator nach dem Starten des Umlenkspiegels ständig in Betrieb zu halten. In diesem Fall sind keine Anlauf-Warteintervalle zu Beginn einer Messung erforderlich und es kann zudem in jeder Meßpause ein Systemtest durchgeführt werden, bei dem z.B. eine Verschmutzung der Tastspitze überprüft wird.

Gemäß Anspruch 10 sind eine oder mehrere Tasten am Meßtaster angebracht. Durch Drücken einer Taste wird der laufende Meßvorgang in der Auswerteeinrichtung übernommen. Durch unterschiedliche Tastsequenzen, ähnlich Morsezeichen, und/oder durch Verwendung mehrerer Tasten können auch Befehle an die Auswerteeinrichtung gegeben werden.

Der erfindungsgemäße Meßtaster ermöglicht somit eine gewissermaßen automatische Messung, bei der der Benutzer lediglich den Taststift in die Zahnfleischtasche einführen muß. Eine benutzerseitige Justierung des Abtast-Lichtstrahls unter spezieller visueller Überwachung ist nicht erforderlich Damit können auch schwer einsehbare Gebißbereiche einfach und zuverlässig überprüft werden. Zudem ist kein mechanisch am oder im Taststift bewegliches separates Tastelement erforderlich, so daß mit einfachen Taststiften gearbeitet werden kann, die sehr einfach gründlich und vollständig gereinigt und sterilisiert werden können.

Die Erfindung wird nachstehend anhand von Ausführungsbeispielen unter Bezugnahme auf die Zeichnungen näher beschrieben. Es zeigen:
- **Fig. 1**: eine Seitenansicht eines Ausführungsbeispiels des Meßtasters und
- **Fig. 2**: eine Seitenansicht eines weiteren Ausführungsbeispiels des Meßtasters.

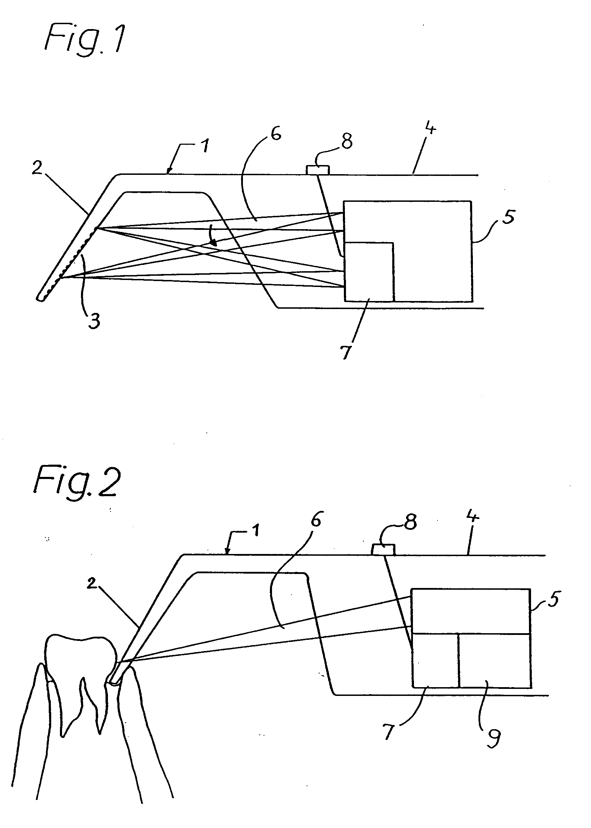

Das in Fig. 1 dargestellte Ausführungsbeispiel des Meßtasters 1 weist an seiner vorderen Spitze einen Taststift 2 auf, der integral mit dem Meßtaster 1 verbunden sein kann, jedoch vorzugsweise von diesem abnehmbar ist, um einen Austausch des Taststifts 2 und/oder eine Reinigung und Sterilisation zu ermöglichen.

Am Taststift 2 ist auf der einem Griffstück 4 des Meßtasters 1 zugewandten Seite eine Meßskala 3 ausgebildet, die eine Vielzahl von in Längsrichtung des Taststifts 2 aufeinanderfolgenden kleinen Reflexionsflächen aufweist. Die Reflexionsflächen sind durch schmale nichtreflektierende oder nicht in Richtung einer Detektoreinrichtung 7 reflektierende Bereiche voneinander getrennt . Der Mittenabstand der Reflexionsflächen kann z.B. 0,2 mm betragen.

Ein im Griffstück 4 des Meßtasters 1 angeordneter Lichtstrahlgenerator 5 erzeugt einen Lichtstrahl 6, der auf die Meßskala 3 auftrifft und entlang dieser bewegt wird. Der Lichtstrahlgenerator 5 kann zur Bewegung des Lichtstrahls 6 schwenkbar im Griffstück angebracht werden, ist jedoch vorzugsweise fest angeordnet und enthält in diesem Fall ein bewegbares Lichtstrahl-Umlenkelement in Form eines Drehspiegels. Der Lichtstrahlgenerator 5 kann eine übliche Lichtquelle mit einer vorgesetzten Fokussierungsoptik zur Bündelung des Lichtstrahls 6 im Bereich des Taststifts 2 aufweisen, enthält jedoch vorzugsweise eine Laserdiode, die durch eine einfache Abbildungsoptik (z.B. eine Linse) einen Lichtstrahl kleinen Durchmessers und hoher Bündelung bei ausreichender Lichtintensität erzeugt.

Das im Lichtstrahlgenerator 5 vorhandene Lichtstrahl-Umlenkelement kann als hin- und herschwingender Galvanospiegel ausgebildet sein, der den Lichtstrahl 6 in eine periodisch wechselnde Aufwärts- und Abwärtsbewegung (Pendelbewegung) entlang des Taststifts 2 versetzt. Vorzugsweise wird jedoch ein Drehspiegel eingesetzt, der zumindest während der Meßphasen kontinuierlich umläuft und beispielsweise durch einen kleinen Elektromotor angetrieben wird. Der Drehspiegel kann durch ein einfaches Metallplättchen gebildet sein, dessen beide Oberflächen ausreichendes Reflexionsvermögen besitzen oder das ggf. zusätzlich verspiegelt ist. Alternativ kann auch ein umlaufender Polygonalspiegel mit drei oder mehr unter gleichem Winkel angeordneten Spiegelflächen eingesetzt werden. Die Verwendung eines kontinuierlich umlaufenden Drehspiegels hat den Vorteil, daß der Lichtstrahl stets nur in einer Richtung über den abzutastenden Bereich, d.h. bei dem Ausführungsbeispiel gemäß Fig. 1 über die Meßskala 3, bewegt wird, was die Auswertung erleichtert.

Zur Erfassung des Lichtstrahls 6 ist die Detektoreinrichtung 7 vorhanden, die vorzugsweise als Fotoempfänger ausgebildet ist. Bei dem Ausführungsbeispiel gemäß Fig. 1 ist die Detektoreinrichtung 7 im Griffstück 4 angeordnet und empfängt den vom Lichtstrahlgenerator 5 erzeugten, an den Reflexionsflächen der Meßskala 3 reflektierten Lichtstrahl 6.

Bei der Bewegung des Lichtstrahls 6 über die Meßskala 3 erzeugen die einzelnen Reflexionsflächen jeweils Lichtblitze oder -impulse, die durch die Detektoreinrichtung 7 erfaßt werden. Bei Einführen des Taststifts 2 bis auf den Grund der Zahnfleischtasche werden die unteren Reflexionsflächen der Meßskala 3 durch den hochstehenden Zahnfleischrand abgedeckt. Die Anzahl der abgedeckten Reflexionsflächen ist dabei direkt proportional der Taschentiefe. Wird der Lichtstrahl 6 bei einer Messung nun über die Meßskala 3 bewegt, so geben die in die Tasche eingetauchten Reflexionsflächen naturgemäß keine Reflexionslichtimpulse ab. Lediglich die freiliegenden Reflexionsflächen oberhalb des Zahnfleischrandes werden durch den über die Meßskala 3 bewegten Lichtstrahl 6 bestrahlt und erzeugen demgemäß Lichtblitze oder -impulse, deren Anzahl der Anzahl der freiliegenden Reflexionsflächen entspricht.

Die Lichtblitze oder -impulse werden durch die Detektoreinrichtung 7 in elektrische Ausgangsimpulse umgesetzt. Durch Zählen der Anzahl der erfaßten Lichtblitze oder -impulse bzw. der Anzahl der Ausgangsimpulse kann somit in einfacher Weise auf die Taschentiefe rückgeschlossen werden. Vorzugsweise wird die erfaßte Lichtblitz- oder Ausgangsimpulsanzahl ausgehend von einem der Maximalanzahl der Reflexionsflächen entsprechenden Vorgabewert abwärts gezählt, wobei der resultierene Zählwert dann unmittelbar die Taschentiefe repräsentiert. Dieser Zählvorgang kann durch eine Auswerteeinrichtung durchgeführt werden, die entweder gleichfalls im Meßtaster 1 angeordnet oder extern angebracht und mit dem Meßtaster 1 über elektrische Leitungen verbunden ist.

Alternativ kann der Taststift 2 auch insgesamt oder zumindest an seiner Innenseite durchgehend reflektierend ausgebildet sein, d.h. keine Meßskala 3 aufweisen. In diesem Fall entstehen beim Überstreichen des Lichtstrahls 6 über den in die Zahnfleischtasche eingetauchten Taststift 2 Detektoreinrichtungs-Ausgangssignale, die bei der Abtastung der freiliegenden reflektierenden Taststiftbereiche hohen (oder niedrigen) Signalpegel besitzen, während der Signalpegel während des Überstreichens des Zahnfleisches niedrig (oder hoch) ist. In diesem Fall kann die Taschentiefe durch Vergleich der Länge der Abschnitte mit hohem bzw. niedrigem Pegel oder durch Erfassung der Lage des Übergangs zwischen hohem und niedrigem Signalpegel erfolgen. Vorzugsweise ist hierbei die Lage und Größe des Winkelbereichs, in dem der Lichtstrahl 6 bei der Abtastung pendelnd oder rotierend verschwenkt wird, festgelegt. Eine solche Festlegung der Abtastbewegungsstrecke ist auch bei dem Ausführungsbeispiel gemäß Fig. 1 sowie bei dem nachstehend näher beschriebenen Ausführungsbeispiel gemäß Fig. 2 sinnvoll, da dann die Gefahr der Erfassung von Störungen aufgrund von Reflexionen aus anderen Mundbereichen oder von sonstigen Abschnitten des Meßtasters 1 gering ist. Zudem beginnt die Lichtstrahlabtastung dann jeweils von einem festen Referenzpunkt, nämlich der oberen oder unteren Grenze des Schwenkbereichs, der bei der Signalauswertung als Bezugspunkt dienen kann. Bevorzugt wird der Abtastbereich des Lichtstrahls 6 so eingestellt, daß er von der Taststiftspitze bis zum anderen Ende des Taststifts 2 reicht oder, bei vorhandener Meßskala 3, ausschließlich deren Bereich überstreicht.

Statt der Ausbildung einer durchgehenden oder vielfach unterbrochenen Reflexionsfläche am Taststift 2 ist es auch möglich, die Detektoreinrichtung 7 unmittelbar auf den Taststift 2 derart aufzubringen, daß diese von der Taststiftspitze bis zu einem einer maximalen Taschentiefe entsprechenden Bereich des Taststifts 2 reicht. Die Detektoreinrichtung 7 ist in diesem Fall vorzugsweise in Dünnschichttechnologie ausgebildet und über Signalleitungen mit der im Meßtaster 1 oder extern angeordneten Auswerteeinrichtung verbunden. In diesem Fall gibt die optoelektrische Detektoreinrichtung 7 Ausgangssignale ab, deren Signalamplitude oder Signaldauer repräsentativ für das Ausmaß des durch den Lichtstrahl 6 bestrahlten Detektoreinrichtungsabschnitts ist. Die Herstellung in Dünnschichttechnologie hat den Vorteil, daß der Abtaststift 2 trotz darauf aufgebrachter Detektoreinrichtung 7 dennoch hohen Temperaturen bis beispielsweise 200°C sowie Reinigungs- und Sterilisationsflüssigkeiten ausgesetzt werden kann, ohne daß die Detektoreinrichtung 7 beschädigt wird.

Das in Fig. 2 gezeigte Ausführungsbeispiel unterscheidet sich vom Ausführungsbeispiel gemäß Fig. 1 dahingehend, daß der Lichtstrahl 6 seitlich neben dem Abtaststift 2, vorzugsweise parallel zu diesem, geführt wird, so daß er den neben dem Taststift 2 liegenden Zahnfleisch- und Zahnbereich abtastet . Der Bewegungsbereich des pendelnd oder rotierend bewegten Lichtstrahls 6 ist hierbei vorzugsweise so festgelegt, daß er von der Taststiftspitze bis zumindest dem Bereich maximaler Taschentiefe reicht. Die Abtastung des seitlich neben dem Taststift 2 liegenden Bereichs hat den Vorteil, daß der Taststift 2 keinerlei besonderen Behandlung wie etwa einer Verspiegelung bedarf, sondern herkömmliche Ausführung haben kann. Da der Zahn und das Zahnfleisch unterschiedliches Reflexionsvermögen haben, ist die von der Detektoreinrichtung 7 erfaßte Lichtintensität bei in die Tasche eingeführtem Taststift 2 während der Abtastung des Zahnfleisches unterschiedlich gegenüber der bei der Abtastung des darüberliegenden Zahnbereichs. Diese unterschiedliche Lichtintensität führt zu einer entsprechenden Pegelveränderung des Detektoreinrichtungs-Ausgangssignals bei Übergang vom Zahnfleisch zum Zahn bzw. umgekehrt. Durch Erfassung der Lage der Pegelveränderung im Detektoreinrichtungs-Ausgangssignal kann folglich die Taschentiefe bestimmt werden. Die hierbei erforderlichen Bezugsgrößen für die zeitliche Bezugspunktvorgabe werden durch ein Referenz-Meßsystem 9, das im Griffstück 4 des Meßtasters 1 angeordnet ist und zugleich auch als Auswerteeinrichtung dienen kann, vorgegeben.

Bei den Ausführungsbeispielen gemäß Fig. 1 und 2 ist an der Außenseite des Griffstücks 4 an geeigneter Stelle eine Taste 8 vorgesehen. Diese Taste 8 kann jeweils zum Starten und Beenden eines jeweiligen Meßvorgangs eingesetzt werden. Bei einer ersten Betätigung der Taste 8 wird der Meßvorgang gestartet, wobei der Lichtstrahl 6 eingeschaltet und auch die Ablenkeinrichtung, d.h. der Umlenkspiegel in Bewegung versetzt wird. Zugleich wird auch die Auswertung aktiviert. Vorzugsweise wird die Taste 8 vom Benutzer dann betätigt, wenn der Taststift 2 vollständig in die Tasche eingeführt ist. Bei nochmaliger Betätigung der Taste 8 wird die Messung wieder beendet, wobei der Lichtstrahl 6 vorzugsweise wieder abgeschaltet und auch der Umlenkspiegel zum Stillstand gebracht wird. Weiterhin wird das während der Meßphase erzielte Meßergebnis gespeichert und/oder auf einem Sichtschirm angezeigt. Dieser Vorgang wiederholt sich bei weiteren Tastenbetätigungen. Mit dieser Konzeption ist es möglich, mit lediglich einer einzigen Taste 8 auszukommen, so daß die Bedienung des Meßtasters 1 sehr einfach ist.

Während der laufenden Meßphase wird der Lichtstrahl 6 zumindest einmal über den vorgesehenen Bewegungshub bewegt. Vorzugsweise überstreicht der Lichtstrahl 6 den vorgesehenen Bewegungsbereich jedoch mehrfach, so daß während einer Meßphase für die Messung einer Taschentiefe mehrere Meßergebnisse gewonnen werden, die dann in statistischer Weise, z.B. durch Mittelwertbildung, verarbeitet werden können. Dies führt zur Genauigkeitserhöhung bei der Erfassung einer jeweiligen Taschentiefe.

Die Signalauswertung und/oder Speicherung erfolgt bevorzugt durch einen Computer, der zugleich auch die Erstellung der erforderlichen Meßprotokolle bewirkt.

Der Meßtaster 1 kann auch so ausgelegt sein, daß er eine Bedienungstaste aufweist, bei deren einmaliger Betätigung ein Meßwert an die Auswerteeinrichtung übergeben wird, bei deren zweimaligem Drücken ein Systemtest durchgeführt wird und bei deren dreimaliger Betätigung der zuletzt abgegebene Meßwert gelöscht wird.

## Patentansprüche

1. Meßtaster zur Erfassung der Tiefe einer Zahnfleischtasche mit
einem Taststift (2), der bis zum Grund der Zahnfleischtasche einführbar ist,
einem relativ zum Taststift (2) bewegbaren Lichtstrahl (6) und
einer Auswerteeinrichtung,
**dadurch gekennzeichnet**,
daß eine Detektoreinrichtung (7) vorhanden ist, die durch den Lichtstrahl (6) oder den reflektierten Lichtstrahl während dessen Bewegung bestrahlt wird und deren Ausgangssignale der Auswerteeinrichtung zugeführt werden,
daß der Lichtstrahl (6) so gesteuert ist, daß er im eingesetzten Zustand des Taststiftes (2) kontinuierlich entlang des Taststiftes (2) bzw. seitlich neben dem Taststift (2) und über den Zahnfleischrand hinaus bewegt wird, und
daß die Auswerteeinrichtung die Taschentiefe mittels der von der Detektoreinrichtung (7) zugeführten Ausgangssignale dadurch ermittelt, daß die Anzahl der Lichtblitze oder -impulse bzw. die Lage des Übergangs zwischen hohem und niedrigem Signalpegel des von der Detektoreinrichtung registrierten Lichtstrahls festgestellt wird.

2. Meßtaster nach Anspruch 1, **dadurch gekennzeichnet**, daß die Detektoreinrichtung (7) an einem Griffstück (4) des Meßtasters (1) angebracht ist und das vom Taststift (2) oder von den neben dem Meßtaster (1) liegenden Zahnfleisch- und Zahnbereichen reflektierte Licht erfaßt.

3. Meßtaster nach Anspruch 1 oder 2, **dadurch gekennzeichnet**, daß am Taststift (2) eine Meßskala (3) angebracht ist, die durch den Lichtstrahl (6) bei dessen Bewegung überstrichen wird und eine Vielzahl von kleinen, in Lichtstrahlbewegungsrichtung angeordneten Reflektorflächen aufweist.

4. Meßtaster nach einem der vorhergehenden Ansprüche, **gekennzeichnet durch** einen Lichtstrahlgenerator (5) zur Erzeugung des Lichtstrahls (6).

5. Meßtaster nach Anspruch 4, **dadurch gekennzeichnet**, daß der Lichtstrahlgenerator (5) eine Laserdiode aufweist.

6. Meßtaster nach Anspruch 5, **dadurch gekennzeichnet**, daß der den Lichtstrahl (6) erzeugende Lichtstrahlgenerator (5) fest im Meßtaster (1) angebracht ist und ein Drehspiegel den auf ihn auftreffenden, durch die Laserdiode erzeugten Lichtstrahl (6) in Bewegung versetzt.

7. Meßtaster nach Anspruch 6, **dadurch gekennzeichnet**, daß der Drehspiegel während der Messung kontinuierlich umläuft.

8. Meßtaster nach einem der vorhergehenden Ansprüche, **gekennzeichnet durch** eine am Meßtaster (1) angebrachte Taste (8), bei deren anfänglicher Betätigung die Erzeugung und Bewegung des Lichtstrahls (6) sowie die Messung beginnen und bei deren nochmaliger Betätigung die Lichtstrahlerzeugung wieder beendet und der bei der Messung ermittelte Meßwert in der Auswerteeinrichtung oder einer separaten Speichereinrichtung gespeichert wird.

9. Meßtaster nach einem der vorhergehenden Ansprüche, gekennzeichnet durch eine am Meßtaster (1) angebrachte weitere Taste, bei deren einmaligem Drücken ein Meßwert übergeben wird, während bei zweimaligem Drücken der Taste ein Systemtest durchgeführt wird und bei dreimaligem Drücken der Taste der zuletzt abgegebene Meßwert gelöscht wird.

10. Meßtaster nach einem der vorhergehenden Ansprüche, **dadurch gekennzeichnet**, daß am Meßtaster (1) eine oder mehrere Tasten angebracht sind, daß durch Drücken einer Taste der laufende Meßvorgang in der Auswerteeinrichtung übernommen wird und daß durch unterschiedliche Tastsequenzen, ähnlich Morsezeichen, und/oder durch Verwendung mehrerer Tasten auch Befehle an die Auswerteeinrichtung gegeben werden können.

## Claims

1. A measuring probe for determining the depth of a periodontal pocket, with
a feeler pin (2) which can be introduced as far as the bottom of the periodontal pocket,
a light beam (6) that can be moved relative to the feeler pin (2), and
a processing device,
**characterized in that**
a detector device (7) is available which is irradiated by the light beam (6) or the reflected light beam during its movement, and whose output signals are fed to the processing device,
that the light beam (6) is controlled in such a way that in the inserted state of the feeler pin (2), it is continuously moved along the feeler pin (2) or laterally next to the feeler pin (2) and beyond the edge of the gingiva, and
that the processing device ascertains the depth of the pocket by means of the output signals fed by the detector device (7) in that one determines the number of the light flashes or pulses, or the position of the transition between the high and low signal level of the light beam registered by the detector device (7).

2. A measuring probe according to claim 1, **characterized in that** the detector device (7) is arranged on a handle part (4) of the measuring probe (1) and that it registers the light reflected by the feeler pin (2) or by the gingival zones or tooth zones lying next to the measuring probe (1).

3. A measuring probe according to claim 1 or 2, **characterized in that** a graduated scale (3) is arranged on the feeler pin (2), which is swept by the light beam (6) during its movement and has a plurality of small reflector surfaces arranged in the direction of movement of the light beam.

4. A measuring probe according to one of the preceding claims, **characterized by** a generator (5) of light beams for producing the light beam (6).

5. A measuring probe according to claim 4, **characterized in that** the light beam generator (5) has a laser diode.

6. A measuring probe according to claim 5, **characterized in that** the light beam generator (5) producing the light beam (6) is fixedly arranged in the measuring probe (1) and that a rotating mirror causes the light beam (6) produced by the laser diode and impinging on the mirror to move.

7. A measuring probe according to claim 6, **characterized in that** the rotating mirror continuously rotates during the measurements.

8. A measuring probe according to one of the preceding claims, **characterized by** a key (8) arranged on the measuring probe (1), during the initial actuation of which key the generation and movement of the light beam (6) as well as the measurements are started, and during whose renewed actuation the generation of the light beam (6) is cancelled again, and the measured value ascertained during the measurement is stored in the processing device or in a separate storage device.

9. A measuring probe according to one of the preceding claims, **characterized by** a further key arranged on the measuring probe (1), during whose single depression a measured value is transmitted, whilst during a double depression of the key, a system test is executed, and if the key is depressed three times, the last transmitted measured value is deleted.

10. A measuring probe according to one of the preceding claims, **characterized in that** one or more keys are arranged on the measuring probe (1), that by depressing a key, the current measurement process is taken over in the processing device, and that by different key sequences similar to Morse signals and/or by the use of several keys, it is also possible to pass commands to the processing device.

## Revendications

1. Sonde pour mesurer la profondeur de la poche parodontale avec
un palpeur (2) pouvant être introduit jusqu'au fond de la poche parodontale,
un faisceau lumineux (6) mobile par rapport au palpeur (2) et
un système d'évaluation
caractérisé par le fait qu'il comporte un système de détection (7), éclairé par le faisceau lumineux (6) ou par le rayon réfléchi, pendant le mouvement de celui-ci, et dont les signaux de sortie alimentent le système d'évaluation
que le rayon lumineux (6) est commandé de telle façon que lors du fonctionnement du palpeur (2), il se déplace en continu le long du palpeur ou bien latéralement, à côté de celui-ci et au-dessus hors de la gencive, et
que le système d'évaluation détermine la profondeur de la poche parodontale, au moyen des signaux de sortie fournis au système de détection (7), en détectant le nombre d'éclats ou d'impulsions de lumière, ou bien la position du passage entre les niveaux de signal haut et bas du rayon lumineux enregistré par le système de détection.

2. Sonde selon la revendication 1, caractérisée par le fait que le système de détection (7) est monté dans une poignée (4) de la sonde (1) et détecte la lumière réfléchie par le palpeur (2) ou par la gencive et les zones de dents se trouvant à côté de la sonde (1).

3. Sonde selon la revendication 1 ou 2, caractérisée par le fait qu'une échelle (3) est placée sur le palpeur (2), échelle qui est balayée par le faisceau lumineux (6) lors de son mouvement et présente une pluralité de petites surfaces réflectrices disposées dans la direction du mouvement du faisceau lumineux.

4. Sonde selon l'une des revendications précédentes, caractérisée par un générateur de faisceau lumineux (5) pour générer ledit faisceau lumineux (6).

5. Sonde selon la revendication 4, caractérisée par le fait que le générateur de faisceau lumineux (5) présente une diode laser.

6. Sonde selon la revendication 5, caractérisée par le fait que le générateur (5) du faisceau lumineux (6) est fixé à l'intérieur de la sonde (1) et qu'un miroir rotatif met en mouvement le faisceau lumineux (6) incident généré par la diode laser.

7. Sonde selon la revendication 6, caractérisée par le fait que le miroir rotatif tourne en continu pendant la mesure.

8. Sonde selon l'une quelconque des revendications précédentes, caractérisée par une touche (8) disposée sur la sonde dont l'actionnement au début démarre la production et le mouvement du faisceau lumineux (6), ainsi que la mesure et dont l'actionnement renouvelé arrête la production du faisceau lumineux et entraîne le stockage de la valeur déterminée lors de la mesure dans le système d'évaluation ou dans un dispositif de stockage séparé.

9. Sonde selon l'une des revendications précédentes, caractérisée par une autre touche disposée sur la sonde (1) dont l'enfoncement unique permet d'obtenir une valeur de mesure, tandis que deux enfoncements de la touche permettent un test du système et trois enfoncements l'effacement de la dernière valeur de mesure enregistrée.

10. Sonde selon l'une des revendications précédentes, caractérisée par le fait qu'une ou plusieurs touches sont disposées sur la sonde (1), que par pression sur une touche le processus de mesure en cours est pris en compte dans le système d'évaluation et que par différentes séquences de pression sur les touches, analogues à des signaux Morses, et/ou en utilisant plusieurs touches, on peut aussi fournir des ordres au système d'évaluation.
